**Europäisches Patentamt**

**European Patent Office**

**Office européen des brevets**

(19)

(11) Veröffentlichungsnummer: **0 234 497**
**B1**

(12) **EUROPÄISCHE PATENTSCHRIFT**

(45) Veröffentlichungstag der Patentschrift: **11.04.90**

(51) Int. Cl.⁵: **B 60 R 5/04**

(21) Anmeldenummer: **87102305.7**

(22) Anmeldetag: **18.02.87**

(54) **Abdeckrollo.**

(30) Priorität: **20.02.86 DE 3605435**

(43) Veröffentlichungstag der Anmeldung:
**02.09.87 Patentblatt 87/36**

(45) Bekanntmachung des Hinweises auf die
Patenterteilung:
**11.04.90 Patentblatt 90/15**

(84) Benannte Vertragsstaaten:
**DE ES FR GB IT SE**

(56) Entgegenhaltungen:
**DE-A-2 526 163**
**FR-A-2 439 105**
**US-A-1 884 414**
**US-A-4 168 094**
**US-A-4 220 367**

(73) Patentinhaber: **Baumeister + Ostler**
**Waldstrasse 34**
**D-7307 Aichwald 3 (Aichschiess) (DE)**

(72) Erfinder: **Ament, Eduard**
**Beutelsbacherstrasse 22**
**D-7307 Aichwald 2 (DE)**

(74) Vertreter: **Rüger, Rudolf, Dr.-Ing. et al**
**Webergasse 3 Postfach 348**
**D-7300 Esslingen/Neckar (DE)**

EP 0 234 497 B1

**Beschreibung**

Die Erfindung betrifft ein Abdeckrollo, insbesondere zum Abdecken des Laderaums von Personenkraftfahrzeugen, mit den Merkmalen des Oberbegriffs des Anspruches 1.

Infolge der heute gebräuchlichen Karosserieformen von Personenkraftfahrzeugen sind insbesondere bei Sportcoupés die Koffer- oder Laderäume hinter der Fondsitzbank durch die Heckscheibe ohne weiteres einsehbar. Das gleiche gilt für den Laderaum von Konbi-PKWs. Es gibt deswegen für diese Fahrzeugarten Abdeckungen, die den Einblick in den Lade- oder Kofferraum verhindern sollen. Hierzu werden in der Regel Rollos verwendet, die sich beim Verladen von sperrigem Gut leicht in einem Rollogehäuse unterbringen lassen und so weder Platz beanspruchen noch der Gefahr einer Beschädigung ausgesetzt sind.

Solange bei dem jeweiligen PKW sich zum Zwecke der Laderaumvergrößerung die Lehne der Fondsitzbank nur insgesamt umklappen läßt, spielt es keine Rolle, wenn das Abdeckrollo mit seinem Gehäuse unlösbar mit der Rücksitzlehne verbunden ist. Spätestens jedoch, wenn geteilte Rücksitzlehnen zur Anwendung kommen, die sich einzeln umklappen lassen, scheidet eine unlösbare Befestigung eines Abdeckrollos aus, das sich über die gesamte Wageninnenbreite erstreckt. Es müssen dann entweder entsprechend der Teilung der Rücksitzlehne zwei Abdeckrollos verwendet werden oder, falls ein ungeteiltes Abdeckrollo zur Anwendung kommt, muß dies leicht herausnehmbar sein.

Bei dem aus der US—A—4 168 094 bekannten Abdeckrollo ist deswegen das Gehäuse an seinen beiden Stirnseiten mit zwei in Verlängerung der Achse der Tuchwelle verlaufenden Fortsätzen versehen, die im Querschnitt vierkantig sind. Einer der Fortsätze sitzt an dem Gehäuse starr, während der andere Fortsatz auf einer kappe angebracht ist, die auf dem Gehäuse des Abdeckrollos teleskopartig verschiebbar ist. Durch eine Druckfeder wird die Kappe mit dem Fortsatz in eine von dem Gehäuse weggerichtete Stellung vorgespannt. Die beiden Fortsätze bilden ersten Halteglieder, die mit zweiten Haltegliedern zusammenwirken, die in dem Kraftfahrzeug im Bereich der hinteren Seitenwände angebracht sind und komplementäre Öffnungen aufweisen.

Zum Einsetzen des Abdeckrollos bzw. zum Herausnehmen wird die den einen Fortsatz tragende Kappe gegen die Federwirkung so weit zurückgezogen, bis der Fortsatz aus der zugehörigen Ausnehmung des zweiten Haltegliedes freikommt. Das Abdeckrollo kann dann auch aus dem anderen karosseriefesten Halteglied entnommen werden.

Die teleskokpartig verschiebbare Kappe verlängert das Gehäuse des Abdeckrollos über die Breite der Tuchbahn hinaus. Es bleibt deswegen in dem Kofferraum des Kraftfahrzeuges zwischen der herausgezogenen Tuchbahn und der Seitenwand ein entsprechend großer Spalt oder es muß eine Konsole angebracht werden, die bis an die herausgezogene Tuchbahn heranreicht. Bei herausgenommenem Abdeckrollo steht die Konsole in den Laderaum.

Ausgehend hiervon ist es Aufgabe der Erfindung, ein Abdeckrollo zu schaffen, bei dem die Länge des Gehäuses nicht nennenswert die Breite der Tuchbahn zu übersteigen braucht.

Diese Aufgabe wird erfindungsgemäß durch ein Abdeckrollo mit den Merkmalen des Anspruches 1 gelöst.

Bei dieser Ausgestaltung wird außerdem eine sehr robuste und langlebige Rastverbindung erhalten.

Damit die Vorspannkraft der Rastverbindung in keinem Falle durch die Zugkraft in der Rollobahn beeinträchtigt wird, wenn die Rollobahn ausgefahren ist, sind vorzugsweise die ersten Halteglieder zum Zwecke des Herausnehmens des Gehäuses etwa in Richtung parallel zur Auszugsrichtung der Rollobahn von den zweiten Haltegliedern trennbar.

Besonders platzsparende Verhältnisse bei günstigem Kräfte- und Momentverlauf ergeben sich, wenn zwei erste und zwei zweite Halteglieder vorgesehen sind, von denen die beiden ersten länglichen Halteglieder mit ihrer Längserstreckung parallel zu der Tuchwelle verlaufen. Die beiden ersten Halteglieder sind dabei bevorzugt an den Stirnseiten des länglichen Gehäuses vorgesehen, während sich die beiden zweiten Halteglieder im wesentlichen den Stirnseiten gegenüberliegend in dem Kraftfahrzeug an den Innenseiten von dessen Seitenwänden befinden.

Eine hinsichtlich der auftretenden Reaktionsmomente infolge der ausgezogenen Rollobahn feste Verbindung wird erreicht, wenn die ersten Halteglieder mit viereckigem Querschnitt ausgebildet sind. Ein versehentliches verdrehtes Einsetzen der ersten Halteglieder in die zweiten Halteglieder läßt sich zwangsläufig vermeiden, wenn die Halteglieder abgeflacht viereckig gestaltet sind, wobei sich große Drehmomente mit kleinen Querkräften erzeugen lassen.

Um ein leichtes Einführen der ersten Halteglieder in die Ausnehmungen zu gestatten, hat in jedem zweiten Halteglied die Ausnehmung vorzugsweise V-förmigen Querschnitt, der sich in Richtung auf die Einführöffnung erweitert.

Wenn auf der von dem Rastglied abliegenden Seite der Ausnehmung eine Feder vorgesehen ist, die das eingesetzte erste Halteglied auf das Rastglied zu vorspannt, dann wirken die Vorspannfeder und die Zugkraft bei ausgefahrenem Rollo in der gleichen Richtung im Sinne eines Festdrükkens der Rastverbindung. Diese Rastverbindung kann dadurch gebildet sein, daß bei dem als Vierkant ausgebildeten ersten Halteglied die in dieselbe Richtung wie der Tuchschlitz weisende Seitenfläche zurückspringend ausgebildet ist, während das Rastglied mit seiner der rückspringenden Seitenfläche zugewandten Fläche an die Form des Haltegliedes angepaßt ist.

Wenn die Andruckfeder in einer Kammer angeordnet ist, die sich auf der von der Einführöffnung abliegenden Seite der Ausnehmung in dem zweiten Halteglied befindet, kann einerseits eine verhältnismäßig kräftige Feder verwendet werden, ohne daß die höhenmäßige Festlegung des rückwärtigen Endes des ersten Haltegliedes beeinträchtigt wird.

In der Zeichnung ist ein Ausführungsbeispiel des Gegenstandes der Erfindung dargestellt. Es zeigen:

Fig. 1 ein Abdeckrollo gemäß der Erfindung in einer perspektivischen Darstellung, wobei das Gehäuse aus den zweiten Haltegliedern herausgenommen ist,

Fig. 2 eines der zweiten Halteglieder in vergrößerter perspektivischer Darstellung und

Fig. 3 das zweite Halteglied nach Fig. 2 in einer Seitenansicht.

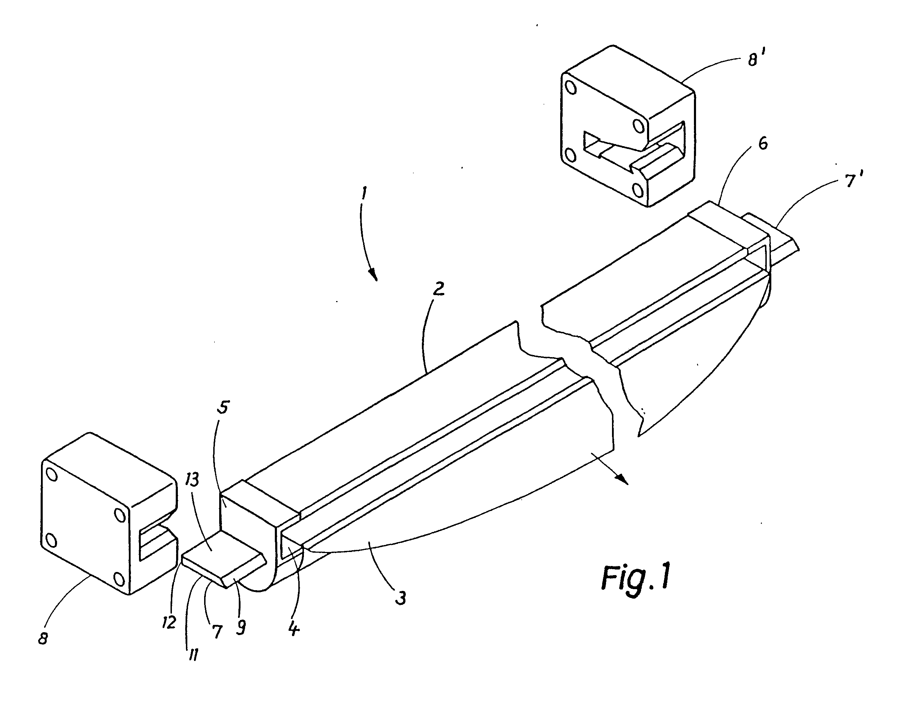

In Fig. 1 ist perspektivisch ein Abdeckrollo 1 zum Abdecken des Laderaums bzw. der Pritsche von Personenkraftfahrzeugen veranschaulicht, der sich hinter den Fondsitzen erstreckt. Das Abdeckrollo dient dazu, den bei modernen Karosserieformen häufig von außen einsehbaren Laderaum optisch zu verschließen.

Das Abdeckrollo 1 enthält ein längliches Gehäuse 2, in dem eine aus Darstellungsgründen nicht sichtbare Tuchwelle drehbar gelagert ist. An der Tuchwelle ist mit einer Kante eine Rollobahn 3 angebracht, die durch einen sich über die gesamte Länge des Gehäuses 2 erstreckenden Tuchschlitz 4 aus dem Gehäuse 2 heraus und von der Tuchwelle abwickelbar ist. Im ausgezogenen Zustand wird die Rollobahn in entsprechenden Haken im Laderaum des PKW eingehängt. Weiters sind in dem Gehäuse 2 Antriebsmittel, beispielsweise in Gestalt eines Federmotors, vorgesehen, der die Tuchwelle im Sinne eines Aufwickelns der Rollobahn auf die Tuchwelle vorspannt, um nach dem Aushängen der Rollobahn die Rollobahn in dem Gehäuse 2 erneut aufwickeln zu können. Die Antriebsmittel stützen sich dabei einerseits an der Tuchwelle und andererseits an der Innenseite des Gehäuses 2 ab.

Das Abdeckrollo 1 ist in dem PKW herausnehmbar gehaltert und weist dazu Halteeinrichtungen auf, die erste Halteglieder 7 und 7' sowie zweite, in dem PKW ortsfest angebrachte Halteglieder 8 und 8' umfassen. Die ersten und die zweiten Halteglieder 7 und 7' bzw. 8 und 8' sind untereinander gleich, weshalb es genügt, jeweils eines der ersten Halteglieder 7, 7' und eines der zweiten Halteglieder 8, 8' zu beschreiben.

Die ersten Halteglieder 7, 7' sind als flachkantige viereckige Prismen ausgebildet und an den beiden Stirnseiten 5 und 6 des Gehäuses 2 angebracht. Sie verlaufen mit ihrer Achse parallel zu der Längsachse des Gehäuses 2 bzw. der darin gelagerten Tuchwelle. Die ersten Halterglieder 7, 7' sind durch die Seitenflächen 9, 11, 12, 13 begrenzt, wobei die beiden größeren Flächen 11 und 13 parallel zueinander verlaufen, während die rückwärtige Seitenfläche 12 bedeutend schmäler ist als die Seitenflächen 11 und 13 und auf letzteren senkrecht steht. Die schmale Seitenfläche 9 ist gagegen schräg zu den beiden Seitenflächen 11 und 13 geneigt.

Beide gleich ausgerichtete erste Halteglieder 7 und 7' sind an deren Stirnseiten 5 und 6 derart angebracht, daß die beiden längeren Seitenflächen 11 und 13, d.h. die längere Querschnittserstreckung der ersten Halteglieder 7 und 7', etwa parallel zu der Auszugsrichtung des Rollos 3 orientiert sind, wobei die schräge schmale Seitenfläche 9 dem Tuchschlitz 4 benachbart ist, wie dies Fig. 1 deutlich zeigt; sie befinden sich unterhalb des Tuchschlitzes 4.

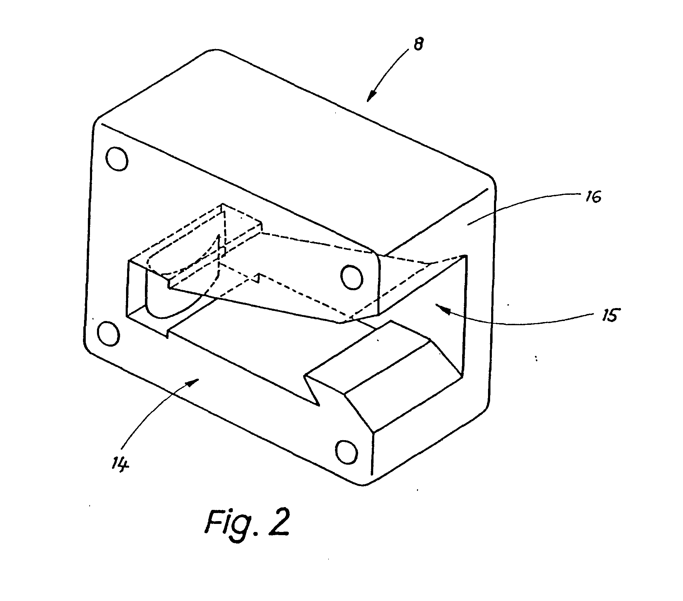

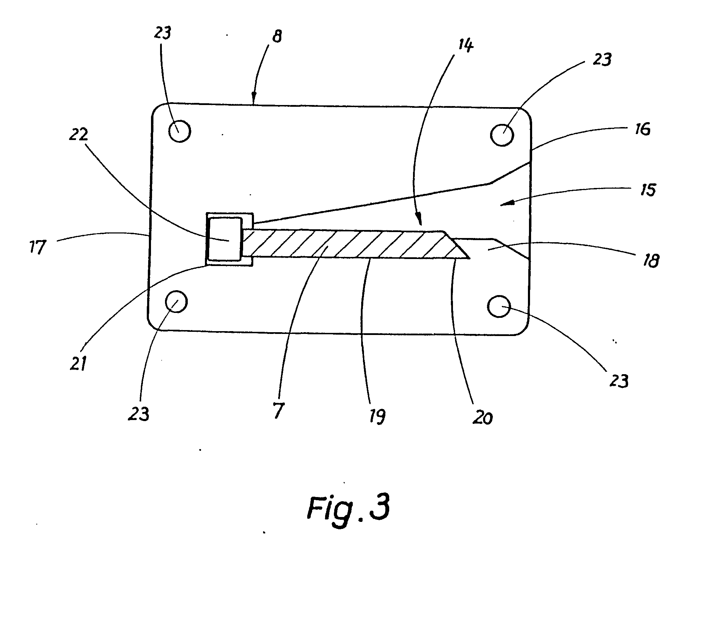

Die Ausgestaltung der zweiten Halteglieder 8, 8' ist unter Hinzunahme der Fig. 2 und 3 erläutert. Wie dargestellt, haben die zweiten Halteglieder 8 eine quaderförmige Gestalt und weisen eine Ausnehmung 14 auf, die sich bei eingesetztem Gehäuse 2 in Richtung auf die benachbarten Stirnseiten 5, 6 öffnet. Mittels einer seitlichen Einführöffnung 15, die in einer Seitenfläche 16 des zweiten Haltegliedes 8 vorgesehen ist, ist die Ausnehmung 14 außerdem randseitig offen, damit durch die Einführöffnung 15 die ersten Halteglieder 7 bzw. 7' in die Ausnehmung 14 einführbar sind. Die Einführöffnung 15 ist in derselben Richtung offen wie der Tuchschlitz 4.

Wie insbesondere Fig. 3 zeigt, hat die Ausnehmung 14 einen V-förmigen Querschnitt, der, ausgehend von der Einführöffnung 15, in Richtung auf die der Seitenwand 16 gegenüberliegende Seitenwand 17 sich verjüngt. Im Bereich der Einführöffnung 15 ist in der Ausnehmung 14 ein balkenförmiges Rastglied 18 ausgebildet, das sich von der unteren, als Sitzfläche dienenden Seitenfläche 19 der Ausnehmung 14 nach oben erhebt und eine schräg oder keilförmig nach innen zurückspringende Fläche 20 trägt.

Wie Fig. 3 zeigt, verläuft die Schrägfläche 20 komplementär zu der Seitenfläche 9 des ersten Halteglieds 7, wenn dies mit seiner Seitenfläche 11 auf der Sitzfläche 19 aufliegt.

Der verbleibende Spalt der Einführöffnung 15 oberhalb des Rastgliedes 18 ist ausreichend groß, um das erste Halteglied 7 durch diesen Spalt hindurch in die Ausnehmung 14 einführen zu können.

Am verjüngten Ende der Ausnehmung 14, d.h. gegenüber der Einführöffnung 15, ist eine Kammer 21 ausgebildet, in die im eingesetzten Zustand das erste Halteglied 7 mit seiner Seitenfläche 12 ein Stück hineinragt und in der eine U-förmig gebogene Blattfeder 22 untergebracht ist, die sich einerseits an einer Seitenwand der Kammer 21 und andererseits an der Seitenfläche 12 des ersten Haltgliedes 7 abstützen kann.

Mittels in den vier Ecken vorgesehener Schraubenöffnungen 23 läßt sich das zweite Halteglied 8 vorzugsweise an der Innenseite der beiden Seitenwände des PKW anbringen.

Bei der gezeigten Ausführungsform ist die Ausnehmung 14 durch eine dahinter liegende Seitenwand des zweiten Haltegliedes 8 begrenzt. Es ist auch möglich, die Ausnehmung 14 durchgehend zu gestalten, so daß die beiden zweiten Halteglieder 8 und 8' nicht, wie gezeigt, zueinander spiegelsymmetrisch, sondern vollständig identisch sein können, da sich dann die Ausnehmung 14 nut- oder schlitzartig durch beide Seitenflächen des quaderförmigen Halteglieds 8 hindurch erstreckend öffnet.

Die Funktion des Abdeckrollos ist wie folgt: An den Innenseiten der beiden einander gegenüberstehenden Seitenwände des PKW bzw. an entsprechenden Konsolen sind hinter der Rückenlehne der Fondsitzbank die beiden zweiten Halteglieder 8 und 8' fluchtend aufeinander ausgerichtet angebracht, wobei sich die beiden Ausnehmungen 14 aufeinander zu öffnen. Die Einführöffnung 15 der beiden zweiten Halteglieder 8 und 8' weist von der Rücklehne zum Heck des Fahrzeugs, womit die Sitzfläche 19 etwa horizontal verläuft, entsprechend der gewünschten Neigung der Rollobahn 3 im ausgezogenen Zustand.

Die lichte Weite zwischen den beiden zweiten Haltegliedern 8, 8' entspricht dem Abstand der beiden Stirnseiten 5 und 6 des Gehäuses 2, damit dieses zwischen die beiden zweiten Halteglieder 8, 8' einschiebbar ist, während die Tiefe der Ausnehmungen 14 an die axiale Erstreckung der beiden ersten Halteglieder 7, 7' angepaßt ist.

Zum Haltern des Gehäuses 2 in den beiden zweiten Haltegliedern 8, 8' werden die beiden ersten Halteglieder 7, 7' mit der schmalen Seitenfläche 12 voraus in die Einführöffnungen 15 der zweiten Halteglieder 8, 8' so weit eingeführt, bis die vorderste Kante der schrägen Seitenfläche 9 an der zurückspringenden Kante des Rastgliedes 18 vorbei bewegt ist. Dabei dringt das erste Halteglied 7 bzw. 7' mit seiner schmalen Seitenfläche 12 in die Kammer 21 ein und drückt dort die U-förmig gebogene Blattfeder zusammen. Infolge des V-förmigen Verlaufs der Ausnehmung 14 zwischen der Einführöffnung 15 und der Kammer 21 wird zwangsläufig beim Einführen der ersten Halteglieder 7, 7' in die Ausnehmung 14 die unten befindliche Seitenfläche 11 in Richtung auf die Sitzfläche 19 der Ausnehmung 14 bewegt.

Sobald die schräge Seitenfläche 9 an dem Rastglied 18 vorbei bewegt ist, läßt sich durch eine geringfügige Drehung entsprechend dem Öffnungswinkel des V-förmigen Querschnitts der Ausnehmung 14 das erste Halteglied 7, 7' in der zugehörigen Ausnehmung 14 nach unten verschwenken bzw. drücken, bis die untere Seitenfläche 11 satt auf der Sitzfläche 19 aufliegt. Wenn jetzt das Gehäuse 2 losgelassen wird, drücken die U-förmigen Blattfedern 21, die in jedem der beiden zweiten Halteglieder 8, 8' vorgesehen sind, die ersten Halteglieder 7, 7' wieder zurück in Richtung auf die Einführöffnung 15. Dabei gleitet Seitenfläche 11 auf der Sitzfläche 19 nach vorne, und zwar so lange, bis die schräge Seitenfläche 9 an der rückspringenden schrägen Seitenfläche 20 des balkenförmigen Rastgliedes 18 anliegt. Jedes der ersten Halteglieder 7, 7' ist damit in dem zugehörigen zweiten Halteglied 8, 8' verrastet. Im eingerasteten Zustand verhakt sich das schräge oder keilförmige Ende, das von der Seitenfläche 9 gebildet ist, unter dem Rastglied 18, das einstückig mit dem zweiten Halteglied 8, 8' ausgebildet ist. In dieser verrasteten Stellung ragt außerdem infolge entsprechender relativer Bemessung das erste Halteglied 7, 7' noch ein Stück in die Kammer 21 hinein, so daß die dort befindliche U-förmige Blattfeder 22 das erste Halteglied 7, 7' in Anlage an dem Rastglied 18 halten kann. Da außerdem an der Übergangsstelle, an der die V-förmige Ausnehmung 14 in die Kammer 21 übergeht, die Weite des dort gebildeten Schlitzes der Dicke des ersten Haltegliedes 7, 7', d.h. dem Abstand der beiden Seitenflächen 11, 13 entspricht, ist das erste Halteglied 7, 7' auch unmittelbar in der Nähe seiner rückwärtigen Seitenfläche 12 festgehalten, womit das erste Halteglied 7, 7' in dem zweiten Halteglied 8, 8' sowohl in der Nähe seiner Rückseite 12 als auch an seiner vorderen Seitenfläche 9 bezüglich seiner Längsachse bzw. der Längsachse der Tuchwelle in beiden Drehrichtungen drehfest gehalten ist, solange nicht ein Drehmoment auftritt, das die Verrastung zwischen der Seitenfläche 9 und dem Rastglied 18 löst.

Da die eben erwähnte Rastverbindung ständig unter der Vorspannung der U-förmigen Blattfeder 22 steht und andererseits das erste Rastglied 7, 7' im Bereich seiner hinteren Seitenfläche 12 von den Schlitzrändern gehalten ist, die am Übergang zwischen der V-förmigen Ausnehmung 14 und der Kammer 21 ausgebildet sind, können auch bei stärkeren Erschütterungen keine Klappergeräusche entstehen, die durch Bewegungen der ersten Halteglieder 7, 7' in den zweiten Haltegliedern 8, 8' auftreten könnten, da erstere in den zweiten Haltegliedern 8, 8' federvorbelastet gefesselt sind. Außerdem werden die ersten Halteglieder 7, 7' infolge des Eigengewichts des Gehäuses 2 sowie der darin enthaltenen Mechanik auf der Sitzfläche 19 anliegend gehalten, womit die Vorspannkraft der U-förmigen Blattfeder 22 zusammen mit der Schrägfläche 9 und dem Rastglied 18 eine Kraftkomponente erzeugt, die in die gleiche Richtung wirkt wie die Gewichtskraft des Gehäuses 2.

Bei der gezeigten Anordnung der ersten Halteglieder 7, 7' unterhalb des Tuchschlitzes 4 erzeugt der in dem Gehäuse 2 vorgesehene Federmotor bei ausgezogener und eingehägter Rollobahn 3 ein Drehmoment, das die ersten Halteglieder 7, 7' in der Weise in den Ausnehmungen 14 zu drehen bestrebt ist, daß die Seitenfläche 12 im Bereich der schrägen Seitenfläche 9 auf die Sitzfläche 19 gedrückt wird. Das bei ausgezogener Rollobahn 3 auftretende Drehmoment wirkt somit im Sinne des Einrastens der Rastverbindung zwischen dem Rastglied 18 und der Schrägfläche 9.

Wenn aus beladungstechnischen Gründen das Gehäuse 2 samt der Rollobahn 3 aus dem PKW herausgenommen werden soll, wird zunächst die Rollobahn 3 nach Aushängen in das Gehäuse 2 zurückgeführt, wobei sich die Rollobahn 3 auf der Tuchwelle aufwickelt und durch den Tuchschlitz 4 in das Gehäuse 2 zurückgezogen wird. Durch geeignete Maßnahmen kann verhindert werden, daß die Tuchbahn 3 auch mit ihrer freien Vorderkante durch den Tuchschlitz 4 in das Innere des Gehäuses 2 zurückgezogen wird. Wenn nun das Gehäuse 2 beidseits gegen die Kraft der beiden U-förmigen Blattfedern 22 tiefer in die zweiten Halteglieder 8, 8' hineingedrückt wird, wird gleichzeitig die Schrägfläche 9 von dem Rastglied 18 wegbewegt, was die zwischen diesen beiden Elementen gebildete Rastverbindung löst. Durch leichtes Aufwärtsdrehen des Gehäuses 2 wird die schräge Seitenfläche 9 von der Sitzfläche 19 abgehoben und bis über die Oberkante des Rastgliedes 18 angehoben. Jetzt läßt sich etwa parallel zu der vorherigen Auszugsrichtung der Rollobahn 3 das Gehäuse 2 mit seinen beiden ersten Haltegliedern 7 und 7' aus den zweiten Haltegliedern 8, 8' über das Rastglied 18 aus der Einführöffnung 15 herausziehen. Während der Schwenkbewegung kippt in jedem zweiten Halteglied 8, 8' das zugehörige erste Halteglied 7, 7' über die Kante, an der die Ausnehmung 14 in die Kammer 21 übergeht.

Aufgrund der dargestellten Ausbildung der ersten und der zweiten Halteglieder entsteht eine Rastverbindung, die unabhängig davon, ob die Rollobahn 3 ausgezogen ist oder nicht, immer im Sinne eines Aneinanderliegens der beteiligten Flächen vorgespannt ist und deshalb weitgehend klapperfrei ist. Die Klapperfreiheit kann noch verbessert werden, wenn der Schlitz im Übergang zwischen der Ausnehmung 14 und der Kammer 21 geringfügig kleiner ist als der Abstand zwischen den Seitenflächen 11 und 13, so daß das erste Halteglied 7, 7' dort zwischen den Wänden der Ausnehmung 14 eingeklemmt ist.

**Patentansprüche**

1. Abdeckrollo, insbesondere zum Abdecken des Laderaums von Personenkraftfahrzeugen, mit einem längslichen Gehäuse (2), in dem eine Tuchwelle drehbar gelagert ist, an der mit einer Kante eine durch einen Tuchschlitz (4) in dem Gehäuse (2) ausziehbare Rollobahn (3) befestigt ist, mit einer in dem Gehäuse (2) vorgesehenen Antriebseinrichtung, durch die die damit gekuppelte Tuchwelle im Sinne eines Einfahrens der Rollobahn (3) in das Gehäuse (2) in Umdrehungen versetzbar ist, sowie mit an dem Gehäuse (2) vorgesehenen, im Querschnitt vierkantigen ersten Haltegliedern (7, 7'), von denen jedes mit einem in dem Kraftfahrzeug angebrachten zweiten Halteglied (8, 8') mit einer im Querschnitt an das erste Halteglied (7, 7') angepaßten, eine Sitzfläche (19) aufweisenden Ausnehmung (14) zusammenwirkt und das mit dem zweiten Halteglied (8, 8') eine ohne Werkzeug lösbare drehfeste Rastverbindung bildet, wobei die miteinander in Eingriff stehenden Halteglieder (7, 7', 8, 8') das von der Antriebseinrichtung auf das Gehäuse (2) übertragene Drehmoment auf das Kraftfahrzeug übertragen und die Halteglieder (7, 7', 8, 8') in die Eingriffsstellung federelastisch vorgespannt sind, dadurch gekennzeichnet, daß an jeder Ausnehmung (14) eine Einführöffnung (15) vorgesehen ist, durch die das zugehörige erste Halteglied (7, 7') im Sinne des Einsetzens oder Herausnehmens des Gehäuses (2) hindurch in die entsprechende Ausnehmung (14) einsetzbar oder aus den entsprechenden Ausnehmungen (14) herausnehmbar ist, daß an der Einführöffnung (15) neben der Sitzfläche (19) ein Rastglied (18) vorgesehen ist, und daß der Sitzfläche (19) gegenüberliegend auf der dem Rastglied (18) abgewandten Seite der Ausnehmung (14) ein Niederhalter für die dem Rastglied (18) abgewandte Kante (12) des ersten Haltegliedes (7, 7') vorgesehen ist.

2. Abdeckrollo nach Anspruch 1, dadurch gekennzeichnet, daß die ersten Halteglieder (7, 7') zum Zweck des Herausnehmens des Gehäuses (2) etwa in Richtung parallel zu der Auszugsrichtung der Rollobahn (3) von den zweiten Haltegliedern (8, 8') trennbar sind.

3. Abdeckrollo nach Anspruch 1, dadurch gekennzeichnet, daß zwei erste und zwei zweite Halteglieder (7, 7', 8, 8') vorgesehen sind, von denen die beiden ersten länglich ausgebildeten Halteglieder (7, 7') mit ihrer Längserstreckung parallel zu der Tuchwelle verlaufen.

4. Abdeckrollo nach Anspruch 3, dadurch gekennzeichnet, daß die beiden ersten Halteglieder (7, 7') an den Stirnseiten (5, 6) des länglichen Gehäuses (2) vorgesehen sind, und daß die beiden zweiten Halteglieder (8, 8') im wesentlichen den Stirnseiten (5, 6) gegenüber befindlich in dem Kraftfahrzeug, vorzugsweise an den Innenseiten von dessen Seitenwänden, anbringbar sind.

5. Abdeckrollo nach Anspruch 1, dadurch gekennzeichnet, daß die abgeflacht viereckigen ersten Halteglieder (7, 7') mit ihrer längeren Querschnittserstreckung etwa parallel zur Auszugsrichtung der Rollobahn (3) verlaufend angeordnet sind.

6. Abdeckrollo nach Anspruch 1, dadurch gekennzeichnet, daß die Ausnehmung (14) im Querschnitt etwa V-förmig ist, wobei sich der Querschnitt in Richtung auf die Einführöffnung (15) erweitert, und daß der Niederhalter von der der Sitzfläche (19) gegenüberliegenden Wand der Ausnehmung (14) gebildet ist.

7. Abdeckrollo nach Anspruch 1, dadurch gekennzeichnet, daß das erste Halteglied (7, 7') im eingesetzten Zustand des Gehäuses (2) federelastisch in Richtung auf das Rastglied (18) vorgespannt ist.

8. Abdeckrollo nach Anspruch 7, dadurch gekennzeichnet, daß auf der von dem Rastglied (18) abliegenden Seite der Ausnehmung (14) eine Feder (22) vorgesehen ist, die das eingesetzte erste Halteglied (7, 7') auf das Rastglied (18) zu vorspannt.

9. Abdeckrollo nach Anspruch 1, dadurch gekennzeichnet, daß die Weite der Ausnehmung (14) an ihrer schmalsten, von der Einführöffnung (15) abliegenden Stelle der Dicke des zugehörigen ersten Haltegliedes (7, 7') entspricht.

10. Abdeckrollo nach Anspruch 1, dadurch gekennzeichnet, daß bei dem als Vierkant ausgebildeten ersten Halteglied (7, 7') die in dieselbe Richtung wie der Tuchschlitz (4) weisende Seitenfläche (9) zurückspringend ausgebildet ist, und daß das Rastglied (18) mit seiner an der rückspringenden Seitenfläche (9) anliegenden Fläche (20) an die Form der entsprechenden Seitenfläche (9) des ersten Halteglieds (7, 7') angepaßt ist, derart, daß es im eingerasteten Zustand auf die von der Ausnehmung (14) gebildete Sitzfläche (19) für das erste Halteglied (7, 7') vorgespannt ist.

11. Abdeckrollo nach Anspruch 8, dadurch gekennzeichnet, daß die Feder (22) in einer Kammer (21) angeordnet ist, die auf der von der Einführöffnung (15) abliegenden Seite der Ausnehmung (14) in dem zweiten Halteglied (8, 8') angeordnet ist, und daß das erste Halteglied (7, 7') in eingerastetem Zustand in die Kammer (21) hineinragt.

**Revendications**

1. Rideau de recouvrement, enroulable et déroulable, notamment pour recouvrir l'espace à bagages de véhicules de tourisme, comportant un boîtier de forme allongée (2) dans lequel est monté mobile autour d'un axe un arbre porte-toile auquel est fixée, par l'un de ses bords, une bande-rideau (3) pouvant être sortie par une fente (4) dans le boîtier (2), un dispositif d'entraînement prévu dans le boîtier (2) par lequel l'arbre porte-toile qui lui est couplé peut être mis en rotation dans le sens correspondant à l'introduction de la bande-rideau (3) dans le boîtier (2), ainsi que des premiers organes de fixation (7, 7') à section droite quadrangulaire, prévus sur le boîtier (2), chacun d'eux coopérant avec un deuxième organe de fixation (8, 8') placé dans le véhicule muni d'un évidement (14) ayant une section droite adaptée au premier organe de fixation (7, 7') et présentant une surface d'assise (19), chaque premier organe de fixation (7, 7') formant avec le deuxième organe de fixation (8, 8') une liaison par enclenchement empêchant la rotation et pouvant être supprimée sans outil, les organes de fixation (7, 7', 8, 8') mutuellement en prise transmettant au véhicule le couple de rotation que le dispositif d'entraînement transmet au boîtier (2), et les organes de fixation (7, 7', 8, 8') étant précontraints élastiquement dans la position engagée, caractérisée par le fait qu'il est prévu, pour chaque évidement (14), une ouverture d'introduction (15) par laquelle le premier organe de fixation y associé (7, 7') peut être introduit dans l'évidement correspondant (14) ou sortie de l'évidement correspondant (14), dans le sens correspondant à l'introduction ou a l'enlèvement du boîtier (2), par le fait qu'un organe de verrouillage par enclenchement (18) est prévu dans l'ouverture d'introduction (15), près de la surface d'assise (19), et par le fait qu'il est prévu, en vis-à-vis de la surface d'assise (19), sur le côté de l'évidement (14) éloigne de l'organe de verrouillage par enclenchement (18), un organe de serrage pour le bord (12) que le premier organe de fixation (7, 7') comporte en son côté éloigné de l'organe de verouillage par enclenchement (18).

2. Rideau de recouvrement enroulable et déroulable selon la revendication 1, caractérisé par le fait que, aux fins d'extraction du boîtier (2), les premiers organes de fixation (7, 7') peuvent être retirés des deuxièmes organes de fixation (8, 8'), dans une direction sensiblement parallèle à la direction de tirage de la bande-rideau (3).

3. Rideau de recouvrement enroulable et déroulable selon la revendication 1, caractérisé par le fait qu'il est prévu deux premiers et deux deuxièmes organes de fixation (7, 7', 8, 8'), les deux premiers organes de fixation (7, 7') dotés d'une forme oblongue ayant leur étendue longitudinale parallèle à l'arbre porte-toile.

4. Rideau de recouvrement enroulable et déroulable selon la revendication 3, caractérisé par le fait que les deux premiers organes de fixation (7, 7') sont prévus sur les côtés en bout (5, 6) du boîtier de forme allongée (2), et par le fait que les deux deuxièmes organes de fixation (8, 8') se trouvant sensiblement en face des côtés en bout (5, 6) peuvent être placés dans le véhicule, de préférence sur les côtés intérieurs de ses parois latérales.

5. Rideau de recouvrement enroulable et déroulable selon la revendication 1, caractérisé par le fait que les premiers organes de fixation (7, 7') quadrangulaires et aplatis, sont disposés de manière que la plus grande dimension de leur section droite soit sensiblement parallèle à la direction d'extraction de la bande-rideau (3).

6. Rideau de recouvrement enroulable et déroulable selon la revendication 1, caractérisé par le fait que la section droite de l'évidement (14) est sensiblement en forme de V, la section droite s'élargissant vers l'ouverture d'introduction (15), et par le fait que l'organe de serrage est constitué par la paroi de l'evidement (14) opposée à la surface d'assise (19).

7. Rideau de recouvrement enroulable et déroulable selon la revendication 1, caractérisé par le fait que, dans l'état correspondant à l'insertion du boîtier (2), le premier organe de fixation (7, 7') est précontraint élastiquement vers l'organe de verrouillage par enclenchement (18).

8. Rideau de recouvrement enroulable et déroulable selon la revendication 7, caractérisé par le fait qu'il est prévu, sur le côté de l'evidement (14) éloigné de l'organe de verrouillage par enclenchement (18), un ressort (22) qui précontraint, vers l'organe de verrouillage par enclenchement (18), le premier organe de fixation (7, 7') inséré.

9. Rideau de recouvrement enroulable et déroulable selon la revendication 1, caractérisé par le fait que, à l'endroit le plus étroit de l'évidement (14), cet endroit étant éloigné de l'ouverture d'introduction (15), la largeur de cet évidement (14) correspond à l'épaisseur du premier organe de fixation (7, 7') correspond.

10. Rideau de recouvrement enroulable et déroulable selon la revendication 1, caractérisé par le fait que le premier organe de fixation (7, 7') étant réalisé avec une section droite en forme de quadrilatère, la surface latérale (9) tournée dans la même direction que la fente (4) est réalisée en forme de biseau, et par le fait que la surface (20) de l'organe de verrouillage par enclenchement (18) s'appliquant contre la surface latérale en forme de biseau (9) est adaptée à la forme de la surface latérale correspondante (9) du premier organe de fixation (7, 7') de manière que, à l'état enclenché celui-ci soit précontraint vers la surface d'assise (19), dont l'évidement (14) est doté, pour le premier organe de fixation (7, 7).

11. Rideau de recouvrement enroulable et déroulable selon la revendication 8, caractérisé par le fait que le ressort (22) est disposé dans une chambre (21) que est située dans le deuxième organe de fixation (8, 8'), du côté de l'evidement (14) éloigné de l'ouverture d'introduction (15), et par le fait que, à l'état enclenché, le premier organe de fixation (7, 7') pénètre dans la chambre (21).

**Claims**

1. A concealing roller blind, more particularly for concealing the luggage space of private motor vehicles, having: an elongate casing (2) in which a cloth shaft is rotatably mounted, to which a roller blind web (3) unwindable through a cloth slot (4) in the casing (2) is attached by one edge; a driving device which is provided in the casing (2) and via which the cloth shaft coupled to the driving device can be rotated for the winding of the roller blind web (3) into the casing (2); and first retaining members (7, 7') of rectangular cross-section disposed on the casing (2), each of which cooperates with a second retaining member (8, 8') which is disposed in the motor vehicle and is formed with a recess (14) adapted in cross-section to the first retaining member (7, 7') and having a seating surface (19), each of the first retaining members forming together with the second retaining member (8, 8') a non-rotatable latching connection which can be released without a tool, the interengaging retaining members (7, 7'; 8, 8') transmitting to the motor vehicle the torque transmitted from the driving device to the casing (2), and the retaining members (7, 7'; 8, 8') being resiliently prestressed into the engagement position, characterized in that each recess (14) has an introduction opening (15) through which the associated first retaining member (7, 7') can be inserted into or removed from the corresponding recess (14) for the insertion or removal of the casing (2); a latch member (18) is provided alongside the seating surface (19) at the introduction opening (15); and a hold-down means for the edge (12) of the first retaining member (7, 7') remote from the latch member (18) is provided opposite the seating surface (19) on the side of the recess (14) remote from the latch member (18).

2. A concealing roller blind according to claim 1, characterised in that the first retaining members (7, 7') can be separated from the second retaining members (8, 8') for the removal of the casing (2) substantially in a direction parallel with the unwinding direction of the roller blind web (3).

3. A concealing roller blind according to claim 1, characterised in that two first and two second retaining members (7, 7'; 8, 8') are provided, of which the first two elongate retaining members (7, 7') extend with their longitudinal extension parallel with the cloth shaft.

4. A concealing roller blind according to claim 3, characterised in that the two first retaining members (7, 7') are provided at the end faces (5, 6) of the elongate casing (2), and the two second retaining members (8, 8') can be disposed in the motor vehicle, preferably on the inner side of its side walls, substantially opposite the end faces (5, 6).

5. A concealing roller blind according to claim 1, characterised in that the flat-edged rectangular first retaining members (7, 7') are disposed with their longer cross-sectional extension extending substantially parallel with the unwinding direction of the roller blind web (3).

6. A concealing roller blind according to claim 1, characterised in that the recess (14) is substantially V-shaped in cross-section, the cross-section widening in the direction of the introduction opening (15), and the hold-down means is formed by the wall of the recess (14) opposite the seating surface (19).

7. A concealing roller blind according to claim 1, characterised in that the first retaining member (7, 7') is resiliently prestressed in the direction of the latch member (18) in the inserted condition of the casing (2).

8. A concealing roller blind according to claim 7, characterised in that a spring (22) which prestresses the inserted first retaining member (7, 7') in the direction of the latch member (18) is provided on the side of the recess (14) remote from the latch member (18).

9. A concealing roller blind according to claim 1, characterised in that the width of the recess (14) corresponds at its narrowest place, remote from the introduction opening (15), to the thickness of the associated first retaining member (7, 7').

10. A concealing roller blind according to claim 1, characterised in that in the first rectangular retaining member (7, 7') the side face (9) pointing in the same direction as the cloth slot (4) is inclined inwardly, and the latch member (18) is so adapted via its face (20) bearing against the inwardly inclined side face (9) to the shape of the corresponding side face (9) of the first retaining member (7, 7') that in the latched-in condition the latched member (18) is prestressed in the direction of the seating surface (19), formed by the recess (14), for the first retaining member (7, 7').

11. A concealing roller blind according to claim 8, characterised in that the spring (22) is disposed in a chamber (21) disposed in the second retaining member (8, 8') on the side of the recess (14) remote from the introduction opening (15), and in the latched-in condition the first retaining member (7, 7') extends into the chamber (21).

Fig.1

1

Fig. 2

Fig. 3